# EUROPÄISCHE PATENTSCHRIFT

(11) **EP 1 252 346 B1**
(45) Veröffentlichungstag und Bekanntmachung des Hinweises auf die Patenterteilung: **20.08.2003**
(21) Anmeldenummer: 01901011.5
(22) Anmeldetag: 18.01.2001
(51) Int. Cl.: C22B 7/02, C22B 19/30, C22B 26/10, C21C 5/38, C21C 5/36

(54) **VERFAHREN ZUM AUFARBEITEN VON STAUBEN ODER STAUBGEMISCHEN**
METHOD FOR REPROCESSING DUST OR DUST MIXTURES
PROCEDE POUR LE RETRAITEMENT DE POUSSIERES OU DE MELANGES DE POUSSIERES

(30) Priorität: 28.01.2000 AT 642000
(43) Veröffentlichungstag der Anmeldung: 30.10.2002
(73) Patentinhaber: Holcim Ltd., 8645 Jona (CH)
(72) Erfinder: EDLINGER, Alfred, A-6780 Bartholomäberg (AT)
(74) Vertreter: Haffner, Thomas M., Dr.
(86) Internationale Anmeldenummer: AT0100011
(87) Internationale Veröffentlichungsnummer: WO01055460

(56) Entgegenhaltungen:
- WO-A-91/09977
- WO-A-99/16917
- STEINBAUER G ET AL: "VERWERTUNG VON GIESSEREIRESTSTOFFEN IN KUPOLOFEN TEIL 2. ERGEBNISSE, BETRIEBLICHE ERFAHRUNGEN, EMPFEHLUNGEN UND HINWEISE" GIESSEREI,DE,GIESSEREI VERLAG. DUSSELDORF, Bd. 82, Nr. 11, 29. Mai 1995 (1995-05-29), Seiten 382-391, XP000506573 ISSN: 0016-9765
- STEINBAUER G ET AL: "VERWERTUNG VON GIESSEREIRESTSTOFFEN IN KUPOLOFEN" GIESSEREI,DE,GIESSEREI VERLAG. DUSSELDORF, Bd. 82, Nr. 9, 8. Mai 1995 (1995-05-08), Seiten 315-321, XP000507661 ISSN: 0016-9765
- PATENT ABSTRACTS OF JAPAN vol. 1999, no. 11, 30. September 1999 (1999-09-30) & JP 11 152511 A (NKK CORP), 8. Juni 1999 (1999-06-08)

## Beschreibung

Die Erfindung bezieht sich auf ein Verfahren zum Aufarbeiten von Stäuben oder Staubgemischen, welche Alkalien und Schwermetalle enthalten, wie z.B. Stahlwerksstäuben, Feinerzen oder Hochofenstäuben, Stäube aus Sinteranlagen, Walzwerken, Müllverbrennungsanlagen sowie Reststoffen und Aschen aus Verbrennungsanlagen und Shredderbetrieben.

Im Zuge von Hochofen- und Stahlwerksprozessen fallen in der Regel hohe Mengen an Stäuben an, deren Aufarbeitung mit einer Reihe von Problemen verbunden ist. Je nach der Herkunft derartiger Stäube enthalten diese in der Regel beträchtliche Mengen an Schwermetallen, deren Konzentration allerdings für eine direkte wirtschaftliche Aufarbeitung in der Regel zu gering ist. Insbesondere Stahlwerksfilterstaub kann über 10 Gew.% Zinkoxyd und Bleioxyd enthalten.

Im Zuge der Aufarbeitung von oxydischen Schlacken wurden bereits eine Reihe von Verfahren vorgeschlagen (s. z.B. JP-A-11 152 511 oder WO-A-99/16917), mit welchen nicht nur die Basizität dieser Schlacken im Hinblick auf eine mögliche Verwendung als Zumahlstoff in der Zementindustrie entsprechend eingestellt wird, sondern gleichzeitig auch eine Reinigung und Abreicherung von unerwünschten Komponenten vorgenommen wird, welche teilweise in metallischer Form in ein Metallbad übergeführt werden können und teilweise wiederum als Sekundärstäube anfallen bzw. aus der Gasphase rückgewonnen werden können. Bei derartigen Verfahren, bei welchen oxydische Schlacken in Bezug auf ihre Zusammensetzung für eine nachfolgende zementtechnologische Verwertbarkeit optimiert werden sollen, werden eine Reihe von Zusätzen bzw. Korrekturstoffen eingebracht bzw. eingeblasen, wobei es mit derartigen Verfahren gelingt auch Schadstoffe und insbesondere organisch belastete Stoffe sicher zu entsorgen.

Die Erfindung zielt nun darauf ab, eine wirtschaftliche Aufarbeitung von Stäuben oder Staubgemischen der eingangs genannten Art zu gewährleisten und gleichzeitig die Möglichkeit zu schaffen, Schlacken in einer Weise zu behandeln, sodaß die zementtechnologische Weiterverwertung erleichtert wird. Zur Lösung dieser Aufgabe weist das erfindungsgremäße Verfahren die Merkmale gemäß Anspruch 1 auf. Die Stäube werden auf oder in ein Bad aus flüssigen Metallen und flüssigen oxidischen Schlacken eingetragen, insbesondere auf- oder eingeblasen und flüchtige Schwermetallverbindungen, wie z.B. Zn- oder Pb-Oxide werden aus der Gasphase abgetrennt und Alkalien werden in die Schlacken eingetragen . Dadurch, daß derartige Stäube oder Filterstäube auf oder in ein Bad aus flüssigen Metallen, und hier in erster Linie aus flüssigem Roheisen und flüssigen oxydischen Schlacken eingetragen werden, gelingt es, eine Phasentrennung mit überaus hoher Selektivität vorzunehmen, wobei insbesondere die in den ursprünglichen Stäuben enthaltenen Alkalien zum überwiegenden Teil in der Schlacke verbleiben und Schwermetalle, wie Zink und Blei in wesentlich konzentrierterer Form im Sekundärstaub wiedergefunden werden können, wobei gleichzeitig die Gesamtmenge des eingetragenen Staubes wesentlich-und insbesondere weit unter die Hälfte der ursprünglichen Menge reduziert werden kann. Neben dem wesentlichen Effekt der Verringerung der Staubmenge gelingt es somit im Rahmen des erfindungsgemäßen Verfahrens Sekundärstäube zu bilden, deren wirtschaftliche Weiterverwendung aufgrund der höheren Konzentration der einzelnen Bestandteile, deren Rückgewinnung sinnvoll erscheint, wesentlich erleichtert wird, wobei die gleichzeitige Anreicherung der oxydischen Schlacken mit Alkalien dem entsprechenden Produkt verbesserte Eigenschaften im Zusammenhang mit einer möglichen zementtechnologischen Weiterverwendung verleiht.

Es wird im Rahmen des erfindungsgemäßen Verfahrens so vorgegangen, daß die Basizität der flüssigen Schlacken vor dem Eintragen der Stäube auf Werte von z.B. zwischen 1 und 1,4 eingestellt werden. Oxydische, flüssige Schlacken mit einer derartigen Basizität, welche auf einem Roheisenbad aufschwimmen, zeichnen sich durch besonders hohe Selektivität in der gewünschten Abtrennung der Alkalien bei gleichzeitig geringer Tendenz der Aufnahme von Schwermetallen aus. Gleichzeitig gelingt es im Rahmen eines derartigen Verfahrens den Eisenoxydgehalt der eingesetzten Stäube bzw. Filterstäube zu verringern, södaß eine Rückgewinnung von flüssigem Eisen aus derartigen Stäuben als Nebeneffekt gelingt, welche die Wirtschaftlichkeit des Verfahrens weiter erhöht. Neben der wesentlichen Verringerung der Gesamtstaubmenge gelingt es somit Eisen aus Eisenoxyden rückzugewinnen und gleichzeitig Schwermetalle im Sekundärstaub anzureichern, wodurch besonders günstige Voraussetzungen für eine wirtschaftliche Rückgewinnung von einzelnen Komponenten der Sekundärstäube geschaffen werden.

Das Einbringen der Stäube erfolgt durch pneumatische Förderung, wobei mit Vorteil so vorgegangen wird, daß die Stäube pneumatisch auf oder unter die Metall- oder Schlackenoberfläche gefördert werden und mit Fördergasen, insbesondere Heißwind, ein- oder aufgeblasen werden.

Eine derartige pneumatische Förderung erlaubt es beim Einbringen der Stäube gleichzeitig eine homogene Durchmischung mit Additiven vorzunehmen, welche in der Folge zum Einen die pneumatische Förderung erleichtern und zum Anderen gleichzeitig gewünschte Komponenten in die oxydischen Schlacken einzubringen erlauben. Insbesondere kann in besonders vorteilhafter Weise so vorgegangen werden, daß die aufzuarbeitenden Stäube mit Additiven, wie z.B. Kohle, Sand und/oder Bauxit vermischt werden, wodurch beispielsweise bei Einsatz von Kohle neben der Verbesserung der pneumatischen Förderbarkeit gleichzeitig auch das entsprechende Reduktionspotential für die kontinuierliche Abtrennung von metallischem Eisen aus in den Stäuben enthaltenen Eisenoxyden zur Verfügung gestellt wird. Der Zusatz von Sand und Bauxit erlaubt es gleichfalls die pneumatische Förderbarkeit zu verbessern, wobei derartige Zusätze gleichzeitig zum Korrigieren der gewünschten Zielbasizität der oxydischen Schlacken und zum Einstellen eines gegebenenfalls erwünschten höheren Aluminiumoxydgehaltes der Schlacke dienen können.

Im Rahmen des erfindungsgemäßen Verfahrens lassen sich aber nun auch gleichzeitig eine Reihe von weiteren Problemstoffen, wie insbesondere organisch belastete Stoffe und insbesondere Aufschlämmungen und Schlämme, sicher behandeln, wobei derartige Zusätze gleichfalls geeignet sind, die pneumatische Förderung der Stäube durch Verhinderung der Agglomeratbildung zu verbessern. Beim Einbringen derartiger, mit organisch belasteten Stoffen vermischter Stäube, gelingt es die organischen Anteile vollständig zu verbrennen, wobei gleichzeitig weiteres Reduktionspotential für die Reduktion von Eisenoxyden aus den Stäuben zur Verfügung gestellt werden kann.

Mit Vorteil wird im Rahmen des erfindungsgemäßen Verfahrens als Metallbad ein Roheisenbad vorgelegt, wobei in besonders vorteilhafter Weise das Bad flüssige Schlacken und flüssiges Roheisen in Gewichtsverhältnissen von 1:3 bis 1:6, vorzugsweise 1:4, enthält.

In besonders einfacher Weise erfolgt das Einbringen der Stäube oder Staubgemische dadurch, daß diese über Bodendüsen in den Konverter eingeblasen werden. Nach der Umsetzung, welche insbesondere an der Phasengrenze zwischen der Schlacke und dem Metallbad erfolgt, fällt Sekundärstaub in einer Menge an, welche weit geringer ist als ein Drittel der ursprünglichen Menge sogar unter 10 % der ursprünglichen Menge liegt.

Die Erfindung wird nachfolgend anhand eines Ausführungsbeispieles näher erläutert. In einem Konverter wurden auf einem Bad aus 10 t flüssigen Roheisens 2 t einer Schlacke mit folgender Zusammensetzung erzeugt:

| Schlacke | |
|---|---|
| | Masse % |
| CaO | 47.9 |
| SiO₂ | 36.6 |
| Al₂O₃ | 7.3 |
| MgO | 2.9 |
| TiO₂ | 1.2 |
| FeO | 1.6 |
| MnO | 2.1 |
| Na₂O | 0.1 |
| K₂O | 0.2 |
| ZnO | 0 |
| PbO | 0 |

Diese Schlacke zeichnet sich durch eine für nachfolgende zementtechnologische Verwertung günstige Basizität aus und enthält in der Regel nur geringe Anteile an Alkalien. Für bestimmte Zementeigenschaften, und insbesondere für die Festigkeitseigenschaften, wie beispielsweise die Frühfestigkeit, von mit derartigen Schlacken als Zumahlstoff hergestellten Mörtel- oder Betonmischungen, wäre ein höherer Alkaligehalt durchaus wünschenswert.

Über Bodendüsen wurde nun in ein derartiges Bad 1 t Stahlwerksfilterstaub mit nachfolgender Zusammensetzung eingeblasen:

| Filterstaub | |
|---|---|
| | Gewichts% |
| CaO | 7.1 |
| SiO₂ | 5.0 |
| Al₂O₃ | 1.3 |
| MgO | 2.9 |
| TiO₂ | 0.4 |
| FeO | 64.0 |
| MnO | 4.2 |
| Na₂O | 2.8 |
| K₂O | 0.1 |
| ZnO | 11.5 |
| PbO | 0.7 |

Der Stahlwerksfilterstaub enthielt somit nennenswerte Mengen an Alkalien und an Schwermetallen. Beim Durchdringen des Bades erfolgte eine Phasentrennung, wobei die im ursprünglichen Staub enthaltenen Alkalien mit hoher Selektivität in der Schlacke gebunden wurden und die Schwermetalle Zink und Blei als entsprechende Oxyde in konzentrierterer Form im Sekundärstaub wiedergefunden werden konnten. Die Schlackenzusammensetzung stellte sich nach dem Behandeln der Stahlwerksfilterstäube mit folgender Richtanalyse ein:

| Schlackenendzusammensetzung | |
|---|---|
| | Gewichts% |
| CaO | 46.9 |
| SiO₂ | 35.4 |
| Al₂O₃ | 7.3 |
| MgO | 3.9 |
| TiO₂ | 1.2 |
| FeO | 1.7 |
| MnO | 2.0 |
| Na₂O | 1.2 |
| K₂O | 0.4 |
| ZnO | 5 ppm |
| PbO | < 5 ppm |

In einer Menge von etwa 264 kg wurde Sekundärstaub mit nachfolgender Zusammensetzung erhalten:

| Sekundärfilterstaubzusammensetzung | |
|---|---|
| | Gewichts% |
| CaO | 4.2 |
| SiO₂ | 3.1 |
| Al₂O₃ | 1.2 |
| MgO | 0.1 |
| TiO₂ | 0.2 |
| FeO | 47.8 |
| MnO | 0.4 |
| Na₂O | 0.2 |
| K₂O | 0.4 |
| ZnO | 39.8 |
| PbO | 2.6 |

Aus dem Vergleich der Zusammensetzung des eingesetzten Stahlwerksfilterstaubes mit der Zusammensetzung des Sekundärfilterstaubes und dem Vergleich der Schlackenzusammensetzungen ergibt sich, daß K₂O zu etwa 3,2 % im Sekundärfilterstaub wiedergefunden werden konnte, wohingegen 96,8 Gew.% des K₂O-Gehaltes des eingesetzten Staubes in der Produktschlacke gefunden werden konnte. Ähnlich verhält sich die Verteilung des ursprünglichen Na₂O-Gehaltes, wobei 4,5 Gew.% des ursprünglichen Teiles im Sekundärfilterstaub und 95,5 Gew.% in der Produktschlacke gefunden wurden.

Umgekehrt verhält es sich mit den Werten Zinkoxyd und Bleioxyd, welche zu 99,7 bzw. 99,9 Gew.% im Sekundärfilterstaub wiedergefunden werden konnten. Bedingt durch die Gesamtabnahme der Sekundärfilterstaubmenge gegenüber der eingesetzten Stahlwerksstaubmenge enthält der Sekundärfilterstaub nunmehr Anteile an diesen Schwermetallen, welche eine wirtschaftliche Aufarbeitung sinnvoll erscheinen lassen. Lediglich etwa 0,3 bzw. 0,1 Gew.% des Zinkoxyd- bzw. Bleioxydanteiles des eingesetzten Stahlwerksfilterstaub konnten in der Produktschlacke festgestellt werden.

## Patentansprüche

1. Verfahren zum Aufarbeiten von Stäuben oder Staubgemischen, welche Alkalien und Schwermetalle enthalten, wie z.B. Stahlwerksstäuben, Feinerzen oder Hochofenstäuben, **dadurch gekennzeichnet, daß** die Stäube auf oder in ein Bad aus flüssigen Metallen und flüssigen oxidischen Schlacken, deren Basizität vor dem Eintragen der Stäube auf Werte zwischen 1 und 1,4 eingestellt wurde, pneumatisch auf oder unter die Schlackenoberfläche gefördert werden und mit Fördergasen ein- oder aufgeblasen werden und daß flüchtige Schwermetallverbindungen, wie z.B. Zn- und/oder Pb-Oxide aus der Gasphase abgetrennt und Alkalien in die Schlacken eingetragen werden.

2. Verfahren nach Anspruch 1, **dadurch gekennzeichnet, daß** als Fördergas Heißluft eihgebracht wird.

3. Verfahren nach Anspruch 1 oder 2, **dadurch gekennzeichnet, daß** die aufzuarbeitenden Stäube mit Additiven, wie z.B. Kohle, Sand und/oder Bauxit vermischt werden.

4. Verfahren nach Anspruch 1, 2 oder 3, **dadurch gekennzeichnet, daß** die Stäube mit organisch belasteten Stoffen vermischt eingesetzt werden.

5. Verfahren nach einem der Ansprüche 1 bis 4, **dadurch gekennzeichnet, daß** als Metallbad ein Roheisenbad vorgelegt wird.

6. Verfahren nach einem der Ansprüche 1 bis 5, **dadurch gekennzeichnet, daß** das Bad flüssige Schlacken und flüssiges Roheisen in Gewichtsverhältnissen von 1:3 bis 1:6, vorzugsweise 1:4, enthält.

7. Verfahren nach einem der Ansprüche 1 bis 6, **dadurch gekennzeichnet, daß** die Stäube oder Staubgemische über Bodendüsen in den Konverter eingeblasen werden.

## Claims

1. A method for processing dusts or dust mixtures containing alkalis and heavy metals, such as, e.g., steelworks dusts, fine ores or blast furnace dusts, **characterized in that** the dusts are pneumatically conveyed onto or into a bath of molten metals and liquid oxidic slags onto or to below the slag surface and blown in or top-blown by the aid of conveying gases, the basicities of said liquid slags having been adjusted to values of between 1 and 1.4 prior to dust charging and that volatile heavy metal compounds such as, e.g., Zn and/or Pb oxides are separated from the gaseous phase and alkalis are introduced into the slags.

2. A method according to claim 1, **characterized in that** hot blast is used as said conveying gases.

3. A method according to claim 1 or 2, **characterized in that** the dusts to be processed are mixed with additives such as, e.g., coal, sand and/or bauxite.

4. A method according to claims 1, 2 or 3, **characterized in that** the dusts are used mixed with organically loaded substances.

5. A method according to any one of claims 1 to 4, **characterized in that** a pig iron bath is provided as the metal bath.

6. A method according to any one of claims 1 to 5, **characterized in that** the bath contains liquid slags and molten pig iron at weight ratios of 1:3 to 1:6, preferably 1:4.

7. A method according to any one of claims 1 to 6, **characterized in that** the dusts or dust mixtures are blown into the converter through bottom tuyeres.

## Revendications

1. Procédé pour le retraitement de poussières ou de mélanges de poussières, qui contiennent des alcalis et des métaux lourds, comme par exemple des poussières d'aciéries, des minerais fins ou des poussières de haut-fourneau; **caractérisé en ce que** les poussières sont transportées sur ou dans un bain constitué de métaux liquides et de laitiers oxydiques liquides, dont la basicité a été réglée avant l'apport des poussières à des valeurs comprises entre 1 et 1,4, de façon pneumatique sur ou sous la surface des laitiers et sont soufflées à l'intérieur ou dessus avec des gaz transporteurs et **en ce que** des composés volatiles de métal lourd, comme par exemple des oxydes de zinc et/ou de plomb, sont séparés de la phase gazeuse et des alcalis sont apportés dans les laitiers.

2. Procédé selon la revendication 1, **caractérisé en ce que** de l'air chaud est introduit comme gaz transporteur.

3. Procédé selon la revendication 1 ou 2, **caractérisé en ce que** les poussières à retraiter soient mélangées avec des additifs, comme par exemple du charbon, du sable et / ou de la bauxite.

4. Procédé selon la revendication 1, 2 ou 3, **caractérisé en ce que** les poussières sont utilisées de façon mélangée avec des substances organiquement chargées.

5. Procédé selon l'une quelconque des revendications 1 à 4, **caractérisé en ce qu'**un bain de fer brut est présenté comme bain de métal.

6. Procédé selon l'une quelconque des revendications 1 à 5, **caractérisé en ce que** le bain contient des laitiers liquides et du fer brut liquide dans des rapports de poids de 1:3 jusqu'à 1:6, de préférence 1:4.

7. Procédé selon l'une quelconque des revendications 1 à 6, **caractérisé en ce que** les poussières ou les mélanges de poussières sont insufflés dans le convertisseur au moyen de buses au sol.
